# EUROPÄISCHE PATENTSCHRIFT

(11) **EP 0 906 500 B1**
(45) Veröffentlichungstag und Bekanntmachung des Hinweises auf die Patenterteilung: **27.09.2000**
(21) Anmeldenummer: 97925998.3
(22) Anmeldetag: 11.06.1997
(51) Int. Cl.: F02B 19/02

(54) **ZÜNDSYSTEM FÜR EINEN GASMOTOR**
IGNITION SYSTEM FOR A GAS ENGINE
SYSTEME D'ALLUMAGE POUR MOTEUR A GAZ

(30) Priorität: 22.06.1996 DE 19624965
(43) Veröffentlichungstag der Anmeldung: 07.04.1999
(73) Patentinhaber: DEUTZ Aktiengesellschaft, 51063 Köln (DE); Get Gas Engine Technology B.V., 6433 KC Hoensbroek (NL)
(72) Erfinder: UITENBROEK, Paul, D-52070 Aachen (DE)
(74) Vertreter: Nau, Walter, Dipl.-Ing.
(86) Internationale Anmeldenummer: EP9703034
(87) Internationale Veröffentlichungsnummer: WO9749907

(56) Entgegenhaltungen:
- EP-A- 0 597 713
- US-A- 4 300 497
- US-A- 5 067 458

## Beschreibung

Die Erfindung betrifft eine Brennkraftmaschine und ein Verfahren zum Betreiben einer derartigen Brennkraftmaschine, wobei die Brennkraftmaschine ein Kurbelgehäuse aufweist, in dem eine Kurbelwelle drehbar gelagert ist, an der zumindest ein Pleuel angelenkt ist, das einen Kolben trägt, der in einem von einem Zylinderkopf abgedeckten Zylinder unter Bildung eines Arbeitsraumes bewegbar ist, wobei dem Arbeitsraum ein Luft-Gas-Gemisch zugeführt wird, das dem Arbeitsraum über Gaswechselkanäle im Zylinderkopf zugeführt wird und wobei in den Zylinderkopf eine Vorkammer eingelassen sowie eine Zündvorrichtung vorhanden ist.

Eine derartige gattungsgemäße Brennkraftmaschine ist aus der US-A 5,067,458 bekannt. Diese Brennkraftmaschine weist eine Hauptbrennkammer und eine Hilfsbrennkammer auf, die über einen Verbindungskanal verbunden sind. In die Hilfsbrennkammer ist eine Zündvorrichtung eingesetzt. Zum Abkoppeln der Zündvorrichtung von der Hauptbrennkammer ist der Verbindungskanal absperrbar. Dadurch ist der Spülvorgang zwischen der Hilfsbrennkammer und der Hauptbrennkammer mit dem Zündzeitpunkt gekoppelt und die Hilfsbrennkammer muß über einen langen Arbeitsbereich mit der Hauptbrennkammer verbunden sein.

Ein anderes Zündsystem für eine Brennkraftmaschine ist aus der DE-A 28 26 807 bekannt. Dabei wird bei dieser Brennkraftmaschine in aufeinander folgenden Arbeitstakten ein sauerstoffhaltiges Gemisch zunächst verdichtet und dadurch erhitzt sowie danach entzündet, worauf die Verbrennungsgase expandieren. Dieses Arbeitsverfahren wird dadurch weitergebildet, daß wenigstens ein Teil des eingesetzten Brennstoffs vor dem Einführen in den Prozeß zumindest auf seine Entzündungstemperatur erhitzt und dann in gasförmigem Zustand nach einem den Verbrennungsprozeß steuernden Gesetz in das sauerstoffhaltige Gemisch eingeblasen wird. Dieses Verfahren und eine entsprechend ausgebildete Brennkraftmaschine erfordern einen hohen Bauaufwand und sind somit in der Realisierung aufwendig, wobei die Zündsteuerung beziehungsweise Entzündung des Gemischs noch Schwankungen unterliegt.

Ein weiteres System ist aus der GB-A 2 031 513 bekannt. Dieses ist ein Zweistoffsystem, d. h. der Brennkraftmaschine wird Pilot-Brennstoff über eine Einspritzdüse zugeführt, der an einer Zündkerze gezündet wird. Dieser entzündet dann den in einer anderen Kammer befindlichen Hauptbrennstoff.

Der Erfindung liegt die Aufgabe zugrunde, eine Brennkraftmaschine und ein Verfahren zum Betreiben der Brennkraftmaschine zur Verfügung zu stellen, das eine sehr genaue und sichere Bestimmung der Entflammungszeit des Arbeitsmittels ermöglicht.

Diese Aufgabe wird gemäß dem Verfahren zum Betreiben der Brennkraftmaschine dadurch gelöst, daß in die Vorkammer eine Zündkammer eingesetzt ist, die dem Arbeitsraum zugeordnet absperrbar ist und daß die Zündkammer die Zündvorrichtung aufweist und zur Zündung von dem Arbeitsraum neu zugeführtem Arbeitsmittel mit dem Arbeitsraum verbunden wird. Die für dieses Verfahren ausgelegte Brennkraftmaschine zeichnet sich dadurch aus, daß in die Vorkammer eine Zündkammer eingesetzt ist, die dem Arbeitsraum zugeordnet ist und über die Vorkammer zu dem Arbeitsraum hin dicht verschließbar ist und daß die Zündkammer die Zündvorrichtung aufweist. Durch dieses Verfahren und diese Ausbildung wird eine sichere Entflammung und stabile Verbrennung des Arbeitsmittels, das im zugeführten Zustand aus einem Kraftstoff-Luft-Gemisch besteht, gewährleistet. Dabei ist dieses Kraftstoff-Luft-Gemisch ein Gas-Luft-Gemisch, so daß die vorliegende Erfindung insbesondere bei stationären Gasmotoren angewendet werden kann. Die bekannte Funkenzündung für Otto-Motoren hat den Nachteil, daß die Flammkernbildung und die daraus resultierende Verbrennung starken Zyklusschwankungen unterliegt. Bei dem ebenfalls bekannten Verfahren der Glühstiftzündung wird ein brennbares Gas-Luft-Gemisch im Brennraum an einem Glühstift mit hoher Oberflächentemperatur entflammt, wobei dadurch eine stabile Entflammung möglich ist, jedoch der Entflammungszeitpunkt schwankt. Die Glühstiftzündung kann sowohl mit als auch ohne Temperaturregelung für den Glühkörper ausgeführt sein. Die Ausführung mit Temperaturregelung weist geringere, jedoch immer noch relativ unreproduzierbare Entflammungszeiten auf. Diese Nachteile und Probleme werden durch die erfindungsgemäße Ausgestaltung vermieden. Es hat sich nämlich gezeigt, daß durch die in der Zündkammer absperrbare Zündvorrichtung das neu zugeführte Arbeitsmittel sicher und zuverlässig gezündet beziehungsweise entflammt werden kann. Entscheidend ist, daß die Zündkammer zum Zeitpunkt der gewollten Zündung (Zündzeitpunkt) mit dem Arbeitsraum verbunden wird, so daß an der Zündvorrichtung im wesentlichen bis zum Zeitpunkt der Zündung stationäre Zustände herrschen. Es stellt sich eine sehr gute Reproduzierbarkeit der Entflammungszeit ein, weil aufgrund der relativ großen Berührungsfläche zwuischen dem zu entzündenden Gemisch und der glühenden Oberfläche des Glühkörpers sich ein Flammenkern bildet, der im Vergleich zu einem von einer Funkenzündung iniierten Flammenkern um ein Vielfaches größer ist. Dieser viel größere Flammenkern setzt durch die in ihm ablaufende chemische Verbrennungsreaktion viel mehr Energie frei, als an die Umbebung durch Wärmeverluste aus dem Flammenkern heraustransportiert wird. Der Flammenkern ist daher von Anfang an stabil. Hierdurch werden die zyklischen Schwankungen, die typisch für den funkengezündeten Ottomotor sind , quasi ausgeschlossen. Weiterhin kann die der Zündvorichtung zuzuführende Energie gegenüber einer bekannten Zündvorrichtung reduziert werden, wodurch die Standzeit der Zündvorrichtung erhöht wird. Zu dem zuvor verwendeten Begriff Entfammungszeit ist auszuführen, daß dies nach allgemeiner Definition das Zeitintervall zwischen dem Zündzeitpunkt und dem Zeitpunkt ist, bei dem 1% des Gemisches umgesetzt ist. Bei konventionellen Funkenzündungen ist der Zündzeitpunkt genau definierbar mit hoher Reproduzierbarkeit festlegbar, was eine sichere Zündsteuerung ermöglicht. Die Entflammungszeit bei konventionellen Funkenzündungen weist jedoch eine schlechte Reproduzierbarkeit auf (Schwankungen in der 1% Umsetzungszeit). Durch die erfindungsgemäße Zündvorrichtung ist es möglich unter Beibehaltung eines gut reproduzierbaren Zündzeitpunktes eine gut reproduzierbare Entflammungszeit zu realisieren.

In Weiterbildung der Erfindung wird ein die Zündkammer zum Arbeitsraum absperrendes Ventil zur Einleitung der Zündung geöffnet. Je nach Ausgestaltung der Brennkraftmaschine befindet sich die Zündkammer direkt benachbart zu dem Arbeitsraum oder aber auch in einer Vorkammer, die dann an den Arbeitsraum anschließt.

In Weiterbildung der Erfindung wird das Ventil nach der erfolgten Zündung geschlossen. Hierzu wird ein Zeitpunkt gewählt, der hinsichtlich der vollständigen Entflammung des Arbeitsmittels in Bezug auf Verbrauch und Abgasemission entsprechend der jeweiligen Erfordernisse optimiert ist. Da sowohl in dem Arbeitsraum als auch in der Vorkammer der gleiche Druck herrscht, treten keine großen Ventilschließ- beziehungsweise Ventilöffnungskräfte auf.

In Weiterbildung der Erfindung ist die Zündkammer an der Innenwandung thermisch isoliert. Dadurch wird erreicht, daß die Abstrahlungsverluste der Zündvorrichtung zwischen zwei aufeinander folgenden Arbeitszyklen einerseits sehr gering sind, andererseits eine zusätzliche thermische Belastung der angrenzenden Bauteile insbesondere des Zylinderkopfs nicht eintritt.

In Weiterbildung der Erfindung ist die Zündkammer durch ein Ventil gegenüber der Vorkammer beziehungsweise dem Arbeitsraum absperrbar und das Venil ist von einem hydraulisch und/oder elektrisch betätigbaren Schaltelement beherrscht. Hier erfolgt die Auswahl der hydraulischen und/oder elektrischen Betätigung nach den Gegebenheiten der jeweiligen Brennkraftmaschine, wobei insbesondere die Größe des Ventils und das zur Verfügungstehen von Hydraulikanlage eine Rolle spielen.

In Weiterbildung der Erfindung ist das Hydrauliksystem ein Hochdrucksystem, wobei in eine Zu- und/oder Absteuerleitung zu dem Schaltelement ein Magnetventil eingeschaltet ist. Dabei weist das Magnetventil einen Steuerschieber auf, der eine Hochdruckleitung in der Form beherrscht, daß die Hochdruckleitung auf eine Niederdruckleitung aufschaltbar ist. Das Magnetventil ist gegebenenfalls ein aus der Einspritztechnik bekanntes und erprobtes Ventil, das in der Einspritztechnik in dem Kraftstoffhochdrucksystem zur Steuerung der Einspritzung eingesetzt wird. Der Steuerschieber wird dabei von einem Elektromagneten betätigt, ist quer zu der Zu- und/oder Absteuerleitung in einem entsprechenden Ventilkörper angeordnet und gibt im geschlossenen Zustand über einen Ringraum in dem Ventilkörper den ungehinderten Strömungsfluß in der Hochdruckleitung frei. Im geöffneten Zustand des Steuerschiebers wird dann diese Hochdruckleitung über eine Einschnürung in dem Steuerschieber mit einer seitlich neben der Hochdruckleitung angeordneten Niederdruckleitung verbunden. Dabei bleibt auch im geöffneten Zustand ein gewisser Mindestdruck in dem Gesamtsystem bestehen.

Zu bemerken ist, daß bei der erfindungsgemäßen Steuerung eine digitale -mittels DSP (Digital Signal Processor) realisierte- Temperaturregelung für den Glühkörper zum Einsatz kommt. Dadurch wird eine sehr genaue Steuerung ermöglicht.

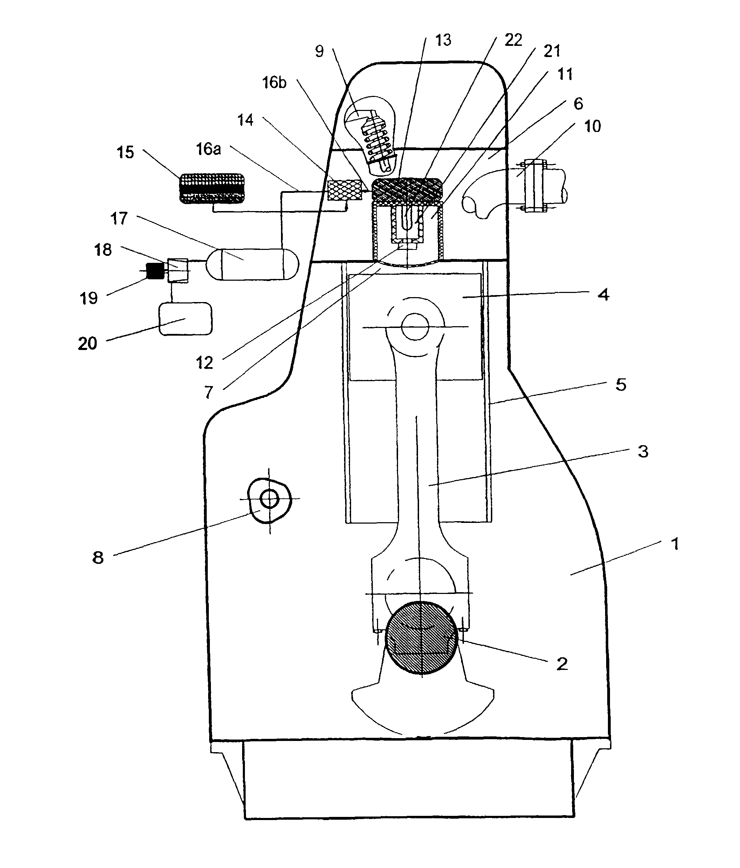

Weitere vorteilhafte Ausgestaltungen der Erfindung sind der Zeichnung zu entnehmen, in der ein in der Zeichnungsbeschreibung näher beschriebenes Ausführungsbeispiel dargestellt ist.

Die Brennkraftmaschine weist ein Kurbelgehäuse 1 auf, in dem eine Kurbelwelle 2 drehbar gelagert ist. An der Kurbelwelle 2 ist ein Pleuel 3 befestigt, das einen Kolben 4 trägt, der in einer Zylinderlaufbuchse 5 bewegbar ist. Die Zylinderlaufbuchse 5 bzw. das Kurbelgehäuse 1 wird nach oben von einem Zylinderkopf 6 abgeschlossen, wobei zwischen dem Kolben 4 und dem Zylinderkopf 6 ein Arbeitsraum 7 gebildet ist.

Der Ein- und Auslaß des Arbeitsmittels in Form von Gas und Luft erfolgt über eine übliche Gaswechseleinrichtung mit Nockenwelle 8 (teilweise dargestelltem) Ventiltrieb 9 und (teilweise dargestellten) Gaswechselkanälen 10.

In dem Zylinderkopf 6 ist eine Vorkammer 11 eingelassen, in die eine Zündkammer 21 eingesetzt ist In die Zündkammer 21 ist eine Zündvorrichtung 22 in Form einer Zündkerze oder eines Glühstiftes eingesetzt,die während des Betriebs der Brennkraftmaschine geregelt betrieben wird. Die Zündkammer 21 ist weiterhin zu der Vorkammer 11 durch ein Ventil 12 verschließbar. Das Ventil 12 wird von einem Schaltelement 13 betätigt, das wiederum von einem Magnetventil 14 gesteuert wird. Das Magnetventil 14 wird von einer elektronischen Steuereinrichtung 15 angesteuert. Dabei kann die Steuereinrichtung 15 auch sämtliche andere Motorfuktionen, insbesondere auch die Zündvorrichtung steuern. Das Magnetventil 14 beherrscht eine Hochdruckleitung 16a, 16b, durch die Hydraulikfluid insbesondere Öl von einem Speicher 17 zu dem Schaltelement 13 geleitet wird. Der Speicher 17 wird von einer Pumpe 18, die beispielsweise von einem Elektromotor 19 betrieben wird, mit Hydraulikflüssigkeit aus einem Tank 20 befüllt. Das Magnetventil 14 hat bei dieser konstruktiven Ausführung eine zweifache Sachaltaufgabe. Bei dem zündungseinleitenden Schaltungsvorgang wird die Verbindung zwischen den Speicher 17 und dem im Schaltelement 13 befindlichen Druckzylinder freigegeben und die Verbindung zwischen dem Druckzylinder und dem Tankrücklauf gesperrt. In diesem Schaltzustand wird ein im Druckzylinder befindlicher Kolben die Verbindung zwischen der Zündkammer 21 und dem Arbeitsraum 7 öffnen (Schaltzustand I). Bei dem zündungsbeendenden Schaltvorgang wird die Verbindung zwischen den Speicher 17 und dem im Schaltelement 13 befindlichen Druckzylinder gesperrt und die Verbindung zwischen dem Druckzylinder und dem Tankrücklauf freigegeben. Der Kolben wird von einer Rückstellfeder zurückgedrückt und schließt somit die Verbindung zwischen Zündkammer 21 und Arbeitsraum 7.

Die Arbeitsweise der erfindungsgemäßen Brennkraftmaschine ist wie folgt: Es handelt sich zunächst bei der Brennkraftmaschine um einen nach dem Viertaktverfahren arbeitenden Gasmotor mit mehreren Zylindereinheiten. Von dem Kolben 4 wird in dem Arbeitsraum 7 zugeführtes Arbeitsmittel in Form eines Luft-Gas-Gemischs verdichtet und muß im Bereich des Zünd-OT's gezündet werden. Dies erfolgt durch die in der Zündkammer 21 angeordnete Zündvorrichtung 22. Im Bereich kurz vor der gewollten Entzündung des im Arbeitsraum 7 (und auch der Vorkammer 11) befindlichen frischen Gemischs wird das Ventil 12 geöffnet, so daß das frische Gemisch in die Zündkammer 21 gelangt und von der Zündvorrichtung entzündet wird. Nach der erfolgten Zündung wird das Ventil 12 wieder geschlossen und somit die Zündvorrichtung bis zum nächsten Arbeitszyklus von dem Arbeitsraum getrennt.

## Patentansprüche

1. Verfahren zum Betreiben einer Brennkraftmaschine mit einem Kurbelgehäuse, in dem eine Kurbelwelle drehbar gelagert ist, an der zumindest ein Pleuel angelenkt ist, das einen Kolben trägt, der in einem von einem Zylinderkopf abgedeckten Zylinder unter Bildung eines Arbeitsraumes bewegt wird, wobei dem Arbeitsraum ein Luft-Gas-Gemisch zugeführt wird, das dem Arbeitsraum über Gaswechselkanäle im Zylinderkopf zugeführt wird und wobei in den Zylinderkopf eine Vorkammer eingelassen sowie eine Zündvorrichtung vorhanden ist,
*dadurch gekennzeichnet,* daß in die Vorkammer (11) eine Zündkammer (21) eingesetzt ist, die dem Arbeitsraum (7) zugeordnet absperrbar ist und daß die Zündkammer (21) die Zündvorrichtung (22) aufweist und zur Zündung von dem Arbeitsraum (7) neu zugeführtem Arbeitsmittel die Zündkammer (21) mit dem Arbeitsraum (7) über die Vorkammer (11) verbunden wird.

2. Verfahren nach Anspruch 1,
*dadurch gekennzeichnet,* daß ein die Zündkammer (21) zum Arbeitsraum (7) absperrendes Ventil (12) zur Einleitung der Zündung geöffnet wird.

3. Verfahren nach einem der vorherigen Ansprüche,
*dadurch gekennzeichnet,* daß das Ventil (12) nach der erfolgten Zündung geschlossen wird.

4. Verfahren nach einem der vorherigen Ansprüche,
*dadurch gekennzeichnet,* daß die Zündvorrichtung (22) in Form einer Glühstiftzündung eine Konstant-Temperatur-Regelung aufweist, die softwaremäßig im Steuergerät (15) realisiert ist.

5. Brennkraftmaschine mit einem Kurbelgehäuse, in dem eine Kurbelwelle drehbar gelagert ist, an der zumindest ein Pleuel angelenkt ist, das einen Kolben trägt, der in einem von einem Zylinderkopf abgedeckten Zylinder unter Bildung eines Arbeitsraumes bewegbar ist, wobei dem Arbeitsraum ein Luft-Gas-Gemisch zugeführt wird, das dem Arbeitsraum über Gaswechselkanäle im Zylinderkopf zugeführt wird und wobei in den Zylinderkopf eine Vorkammer eingelassen sowie eine Zündvorrichtung vorhanden ist,
*dadurch gekennzeichnet,* daß in die Vorkammer (11) eine Zündkammer (21) eingesetzt ist, die dem Arbeitsraum (7) zugeordnet ist und über die Vorkammer (11) zu dem Arbeitsraum (7) hin dicht verschließbar ist und daß die Zündkammer (21) die Zündvorrichtung (22) aufweist.

6. Brennkraftmaschine nach Anspruch 5,
*dadurch gekennzeichnet,* daß die Zündkammer (21) an der Innenwandung thermisch isoliert ist.

7. Brennkraftmaschine nach einem der Ansprüche 5 oder 6,
*dadurch gekennzeichnet,* daß die Zündkammer (21) durch das von einem Schaltelement (13) betätigte Ventil (12) von der Vorkammer (11) und/oder dem Arbeitsraum (7) absperrbar ist und daß das Schaltelement (13) hydraulisch und/oder elektrisch betätigbar ist.

8. Brennkraftmaschine nach Anspruch 7,
*dadurch gekennzeichnet,* daß das Hydrauliksystem ein Hochdrucksystem ist, und daß in eine Zu- und/oder Absteuerleitung zu dem Schaltelement (13) ein Magnetventil (14) eingeschaltet ist.

9. Brennkraftmaschine nach Anspruch 8,
*dadurch gekennzeichnet,* daß das Magnetventil (14) einen Steuerschieber aufweist, der eine Hochdruckleitung (16a, 16b) in der Form beherrscht, daß die Hochdruckleitung (16a, 16b) auf eine Niederdruckleitung aufschaltbar ist.

## Claims

1. A method of operating an internal combustion engine comprising a crankcase in which a crankshaft is rotatably mounted and linked to at least one connecting rod bearing a piston which moves in a cylinder covered by a cylinder head and forms a working chamber, wherein an air-gas mixture is supplied to the working chamber via gas change valves in the cylinder head and wherein a precombustion chamber is formed in the cylinder head and an ignition device is present,
**characterised in that** an ignition chamber (21) is inserted in the precombustion chamber (11) and is associated with and can be shut off from the working chamber (7), and the ignition chamber (21) is provided with the ignition device (22) and, in order to ignite working medium newly supplied from the working chamber (7), the ignition chamber (21) is connected to the working chamber (7) via the precombustion chamber (11).

2. A method according to claim 1, **characterised in that** a valve shutting the ignition chamber (21) off from the working chamber (7) is opened in order to initiate ignition.

3. A method according to any of the preceding claims, **characterised in that** the valve (12) is closed after ignition has occurred.

4. A method according to any of the preceding claims, **characterised in that** the ignition device (22) in the form of a glow plug ignition system comprises a constant-temperature regulator in the form of software in the control device (15).

5. An internal combustion engine comprising a crankcase in which a crankshaft is rotatably mounted and linked to at least one connecting rod bearing a piston which moves in a cylinder covered by a cylinder head and forms a working chamber, wherein an air-gas mixture is supplied to the working chamber via gas change valves in the cylinder head and wherein a precombustion chamber is formed in the cylinder head and an ignition device is present,
**characterised in that** an ignition chamber (21) is disposed in the precombustion chamber (11) and is associated with the working chamber (7) and can be sealed off from the working chamber (7) via the precombustion chamber (11), and the ignition chamber (21) is provided with the ignition device (22).

6. An engine according to claim 5, **characterised in that** the ignition chamber (21) is thermally insulated from the inner wall.

7. An engine according to claim 5 or 6, **characterised in that** the ignition chamber (21) can be shut off from the precombustion chamber (11) and/or the working chamber (7) by a valve (12) actuated by a switch element (13), and the switch element (13) is hydraulically and/or electrically actuated.

8. An engine according to claim 7, **characterised in that** the hydraulic system is a high-pressure system and a solenoid valve (14) is inserted in a line for connecting and/or disconnecting the switch element (13).

9. An engine according to claim 8, **characterised in that** the solenoid valve (14) comprises a spool valve which can control a high-pressure line (16a, 16b) by connecting it to a low-pressure line.

## Revendications

1. Procédé servant à faire fonctionner un moteur à combustion interne comprenant un carter de vilebrequin, dans lequel un arbre de vilebrequin est monté de façon à pouvoir tourner, sur lequel est articulée au moins une bielle, portant un piston, qui peut se déplacer dans un cylindre recouvert par une culasse en formant une chambre de travail, un mélange d'air et de gaz étant amené à la chambre de travail, par l'intermédiaire de canaux d'échanges des gaz dans la culasse, une chambre de précombustion étant ménagée dans la culasse et un dispositif d'allumage étant prévu,
caractérisé en ce que
• dans la chambre (11) de précombustion est insérée une chambre d'allumage (21), qui peut être obturée vis-à-vis de la chambre de travail (7) et,
• la chambre d'allumage (21) présente le dispositif d'allumage (22) et est reliée à la chambre de travail (7) au moyen de la chambre de précombustion (11) pour l'allumage du moyen de travail nouvellement amené à la chambre de travail (7).

2. Procédé selon la revendication 1,
caractérisé en ce que
une soupape (12) qui obture la chambre d'allumage (21) en direction de la chambre de travail (7) est ouverte pour introduire l'allumage.

3. Procédé selon l'une des revendications précédentes,
caractérisé en ce que
la soupape (12) est fermée une fois qu'a eu lieu l'allumage.

4. Procédé selon l'une des revendications précédentes,
caractérisé en ce que
le dispositif d'allumage (22) présente sous la forme d'un allumage à bougie de préchauffage une régulation à température constante, qui est réalisée dans l'appareil de commande (15) au moyen d'un logiciel.

5. Moteur à combustion interne comprenant un carter de vilebrequin, dans lequel est monté un arbre de vilebrequin de façon à pouvoir tourner, sur lequel est articulée au moins une bielle portant un piston, qui peut se déplacer dans un cylindre recouvert par une culasse en formant une chambre de travail, un mélange d'air et de gaz étant amené à la chambre de travail, par l'intermédiaire de canaux d'échanges des gaz dans la culasse, une chambre de précombustion étant ménagée dans la culasse et un dispositif d'allumage étant prévu,
caractérisé en ce que
• dans la chambre de précombustion (11) est insérée une chambre d'allumage (21) qui est associée à la chambre de travail (7) et peut être obturée de façon étanche au moyen de la chambre de précombustion (11) en direction de la chambre de travail (7) et,
• la chambre d'allumage (21) présente le dispositif d'allumage (22).

6. Moteur à combustion interne selon la revendication 5,
caractérisé en ce que
la chambre d'allumage (21) est isolée thermiquement sur sa paroi intérieure.

7. Moteur à combustion interne selon l'une des revendications 5 ou 6,
caractérisé en ce que
• la chambre d'allumage (21) par la soupape (12) actionnée par un élément de manoeuvre (13) peut être obturée par rapport à la chambre de précombustion (11) et/ou à la chambre de travail (7) et
• l'élément de manoeuvre (13) peut être actionné hydrauliquement et/ou électriquement.

8. Moteur à combustion interne, selon la revendication 7,
caractérisé en ce que
• le système hydraulique est un système à haute pression, et,
• on insère dans une conduite d'arrivée et/ou de départ vers l'élément de manoeuvre (13) une électrovanne (14).

9. Moteur à combustion interne, selon la revendication 8,
caractérisé en ce que
l'électrovanne (14) présente un tiroir de commande qui commande une conduite à haute pression (16a, 16b) sous une forme telle que la conduite à haute pression (16a, 16b) puisse être branchée sur une conduite à basse pression.
